(19) Europäisches Patentamt / European Patent Office / Office européen des brevets

(11) **EP 3 514 642 B1**

(12) **EUROPEAN PATENT SPECIFICATION**

(45) Date of publication and mention
of the grant of the patent:
**09.06.2021 Bulletin 2021/23**

(21) Application number: **17850475.9**

(22) Date of filing: **17.04.2017**

(51) Int Cl.:
***G05B 23/02*** *(2006.01)*

(86) International application number:
**PCT/JP2017/015419**

(87) International publication number:
**WO 2018/051568 (22.03.2018 Gazette 2018/12)**

(54) **PLANT ABNORMALITY DIAGNOSIS DEVICE AND PLANT ABNORMALITY DIAGNOSIS SYSTEM**

ANLAGENANOMALIEDIAGNOSEVORRICHTUNG UND ANLAGENANOMALIEDIAGNOSESYSTEM

DISPOSITIF ET SYSTÈME DE DIAGNOSTIC D'ANOMALIE D'INSTALLATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.09.2016 JP 2016180551**

(43) Date of publication of application:
**24.07.2019 Bulletin 2019/30**

(73) Proprietor: **Hitachi, Ltd.**
**Tokyo 100-8280 (JP)**

(72) Inventors:
• **HAYASHI, Yoshiharu**
**Tokyo 100-8280 (JP)**
• **SEKIAI, Takaaki**
**Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
WO-A1-2011/089649    WO-A1-2011/089649
WO-A1-2015/182317    JP-A- 2015 021 901
JP-A- 2016 038 688    JP-A- 2016 081 482
JP-A- 2016 081 482

**Description**

Technical Field

The present invention relates to a plant abnormality diagnosis device and a plant abnormality diagnosis system which use an Adaptive Resonance Theory (ART) which is one of clustering techniques.

Background Art

Early detection of an abnormal state of a plant before an alarm is outputted is effective to improve operation reliability. An effective method for detecting an abnormality of a plant early is to learn a data pattern during a normal time of the plant in advance, compare this data pattern and a measurement data pattern and thereby detect a change of the state. One of these data analyzing methods is an Adaptive Resonance Theory (ART, referred to as ART below). The ART is one of clustering analyzing methods, and a method for clustering input data into a plurality of categories (clusters). Each category indicates a set of items of data having similarity. A general clustering analyzing method maps a plurality of items of input data on a multidimensional space, and defines the set of items of data based on a distance on a space. According to the ART, a category number is allocated to input data. The input data having the same category number indicates high similarity.

When abnormality diagnosis of a plant is performed by using the ART, plant data during a normal time is set first as an input of the ART, and category numbers are outputted. The category numbers outputted in this case are defined as a normal state. The above processing is referred to as "learning" of the normal state. When operation conditions of a plant differ even during the normal time, category numbers associated with the operation conditions are defined. Hence, there is a plurality of category numbers indicating a normality.

Next, measurement data of a plant is set as the input of the ART, and the category number is outputted. This processing is referred to as "diagnosis". When the category number outputted by the diagnosis processing is included in the category numbers outputted by the learning processing, the category number is decided as normal. On the other hand, when a category number which is not outputted by the learning processing is newly outputted, this input data is a data pattern which is not included in normal data, and the category number is decided as abnormal.

For example, a technique disclosed in PTL 1 is known to perform abnormality diagnosis of a plant by using this ART. A plant monitoring assist system disclosed in PTL 1 detects an abnormality based on information of a category determined by ART by using measurement data of a desalination plant, and further evaluates an abnormality degree and selects a signal having a high contribution rate to an abnormal state. An adjustment parameter $\rho$ for adjusting a size of a category is used to evaluate the abnormality degree. As the adjustment parameter $\rho$ is made higher, the category becomes smaller, so that input data can be further classified. Hence, even when there is a slight difference from a normal data pattern, a category is determined as a new category, so that it is possible to increase a sensitivity with respect to an abnormality. Furthermore, it is easy to determine an abnormality in a case of a normal fluctuation included in input data, and therefore erroneous detection increases. On the other hand, as the adjustment parameter $\rho$ is made smaller, the category becomes larger, and data is roughly classified. Therefore, although the sensitivity with respect to an abnormality becomes low, erroneous detection can be reduced.

Under a plurality of conditions that values of the adjustment parameter $\rho$ are changed, a normality/abnormality is determined by the ART, and an abnormality degree is determined according to the value of $\rho$ determined as abnormal. When, for example, $\rho$ is small, i.e., when the sensitivity with respect to an abnormality is low, if the ART determines the abnormality, it can be decided that a difference from a normality is very great. By using this decision, warning levels such as "high", "middle", and low" are evaluated.

Furthermore, PTL 1 uses a positional relationship in a case where input data is mapped on a multidimensional space to select a signal having a high contribution rate to an abnormal state. When input data is not included in a category indicating a normality during the diagnosis processing, the contribution rate of each signal is calculated from a difference in a distance in each axial (each signal) direction for a positional relationship between input data on the space and a barycenter of the nearest category of this input data. PTL 2 relates to a diagnostic method including: a first step of extracting diagnostic signals to be used for diagnosing the state of the subject to be diagnosed from a measurement signal database wherein the measurement signals of the subject are stored; a second step of sorting the diagnostic signals into categories; a third step of generating a new category different from said categories and sorting a latest diagnosis signal when the latest diagnosis signal does not belong to said categories; a fourth step of extracting data items which caused the generation of the new category; and a fifth step of extracting related data items closely related to the extracted data items.

Citation List

Patent Literature

PTL 1: JP 2016-81482 A
PTL 2: WO 2011/089649 A1

Summary of Invention

Technical Problem

However, according to a configuration disclosed in PTL 1, every time measurement data of the desalination plant, i.e., measurement data of each sensor installed in the desalination plant is obtained, category determination processing is performed, and the contribution rate is calculated per measurement data (per input signal) from each sensor. Early determination on an abnormality of an entire plant is not taken into account at all. In other words, according to the configuration disclosed in PTL 1, every time the measurement data of each sensor is obtained, the category determination processing is performed by the ART. The category determination processing performs convergent calculation, and therefore it is concerned that the processing requires a time, a delay of a time occurs until an abnormality is detected or a sudden abnormality of the entire plant is missed.

It is therefore an object of the present invention to provide a plant abnormality diagnosis device and a plant abnormality diagnosis system which can determine an abnormality of an entire plant early during abnormality diagnosis of the plant by using ART.

Solution to Problem

The aforementioned object is solved by the invention according to the independent claims. Further preferred developments are described by the dependent claims. In particular, a plant abnormality diagnosis device according to the present invention includes an abnormality rate calculating unit which calculates an abnormality rate of an entire diagnosis target plant from a plurality of items of measurement data of various sensors installed in the diagnosis target plant based on a difference in a distance in a space between data and the plurality of items of measurement data, the data belonging to a category determined based on data during a normal time by an Adaptive Resonance Theory.

Furthermore, a plant abnormality diagnosis system according to the present invention includes: a plant abnormality diagnosis device which diagnoses an abnormality of a diagnosis target plant; a plant control device which controls a process of the diagnosis target plant and transmits to the plant abnormality diagnosis device a plurality of items of measurement data of various sensors installed in the diagnosis target plant; and an input/output device which includes an input unit and a display unit, and the plant abnormality diagnosis device includes the abnormality rate calculating unit which calculates an abnormality rate of the entire diagnosis target plant from the plurality of items of measurement data of various sensors transmitted from the plant control device based on a difference in a distance in a space between data and the plurality of items of measurement data, the data belonging to a category determined based on data during a normal time by an Adaptive Resonance Theory. Advantageous Effects of Invention

The present invention can provide a plant abnormality diagnosis device and a plant abnormality diagnosis system which can determine an abnormality of an entire plant early during abnormality diagnosis of the plant by using ART.

Problems, configurations, and effects other than the above problem, configuration, and effect will be made apparent from the following embodiment.

Brief Description of Drawings

[FIG. 1] FIG. 1 is a functional block diagram illustrating an entire schematic configuration of a plant abnormality diagnosis system according to a first embodiment of the present invention.
[FIG. 2] FIG. 2 is an explanatory diagram of a concept of clustering.
[FIG. 3] FIG. 3 is a configuration diagram of main units of an ART processing unit illustrated in FIG. 1.
[FIG. 4] FIG. 4 is a diagram illustrating a data structure of a category database illustrated in FIG. 1.
[FIG. 5] FIG. 5 is a diagram illustrating a data structure of a plant database illustrated in FIG. 1.
[FIG. 6] FIG. 6 is a diagram illustrating a data structure of a diagnosis result database illustrated in FIG. 1.

[FIG. 7] FIG. 7 is a diagram illustrating a data structure of an abnormal event database illustrated in FIG. 1.

[FIG. 8] FIG. 8 is a diagram illustrating an abnormality rate calculating method.

[FIG. 9] FIG. 9 is a diagram illustrating a temporal change of the abnormality rates.

[FIG. 10] FIG. 10 is a diagram illustrating a data structure of a diagnosis result database.

[FIG. 11] FIG. 11 is an explanatory diagram of a concept of clustering of ART.

[FIG. 12] FIG. 12 illustrates an example of a display screen which displays temporal change of the abnormality rate and temporal changes of category numbers.

[FIG. 13] FIG. 13 illustrates an example of the display screen which displays the temporal change of the abnormality rate and the temporal changes of the category numbers.

[FIG. 14] FIG. 14 illustrates an example of the display screen during registration of an abnormal event.

[FIG. 15] FIG. 15 illustrates an example of the display screen which displays temporal changes of the category numbers and an abnormal event which is a diagnosis result.

Description of Embodiments

Plants to which a plant abnormality diagnosis device and a plant abnormality diagnosis system according to an embodiment of the present invention are applied include water treatment plants such as seawater desalination plants, sewage treatment plants, or clean water treatment plants, and various industrial plants such as power plants and chemical plants.

The embodiment of the present invention will be described below with reference to the drawings.

First Embodiment

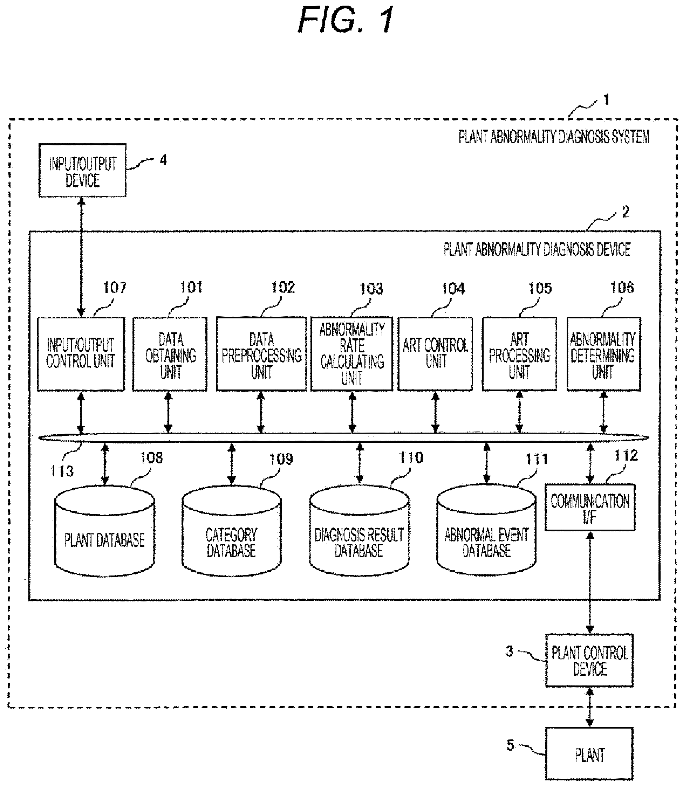

FIG. 1 is a functional block diagram illustrating an entire schematic configuration of a plant abnormality diagnosis system according to a first embodiment of one embodiment of the present invention. As illustrated in FIG. 1, a plant abnormality diagnosis system 1 includes a plant abnormality diagnosis device 2 which diagnoses an abnormality of a plant 5, a plant control device 3 which monitors the plant 5 and controls a process, and an input/output device 4 which includes an input unit and an output unit.

The input/output device 4 includes an input device such as a keyboard or a mouse, and is used by a user to input and/or register data to the plant abnormality diagnosis device 2. Furthermore, the input/output device 4 is an output unit including a display device such as a liquid crystal display (LCD) or an organic EL display, and a printing output device such as a printer, and displays a diagnosis result of an abnormality of the diagnosis target plant 5 obtained by the plant abnormality diagnosis device 2 or a screen for interactive processing for the user of the plant abnormality diagnosis device 2.

The plant control device 3 is realized by, for example, a control panel or an SCADA (Supervisory Control And Data Acquisition). When the SCADA is used as the plant control device 3, the SCADA includes at least a programmable logic controller (PLC) which controls processes of various devices which constitute the plant 5, and a communication function of collecting measurement data of various sensors such as a flowmeter, a pressure gauge, and a thermometer installed in the various devices and a pipe which constitute the plant 5, and transmitting the collected measurement data of the various sensors to the plant abnormality diagnosis device 2.

The plant abnormality diagnosis device 2 includes a data obtaining unit 101, a data preprocessing unit 102, an abnormality rate calculating unit 103, an ART control unit 104, an ART processing unit 105, an abnormality determining unit 106, an input/output control unit 107, a plant database 108, a category database 109, a diagnosis result database 110, an abnormal event database 111, and a communication I/F 112 which receives the measurement data of the various sensors transmitted from the plant control device 3. These components are mutually connected accessibly by an internal bus 113. The data obtaining unit 101, the data preprocessing unit 102, the abnormality rate calculating unit 103, the ART control unit 104, the ART processing unit 105, the abnormality determining unit 106, and the input/output control unit 107 which constitute the plant abnormality diagnosis device 2 are realized by, for example, a processor such as an unillustrated CPU (Central Processing Unit), a ROM which stores various programs, a RAM which temporarily stores data which is in a process of computation, and a storage device such as an external storage device. The processor such as the CPU reads and executes various programs stored in the ROM, and stores a computation result which is an execution result in the RAM or the external device.

The data obtaining unit 101 obtains via the internal bus 113 the measurement data of the various sensors from the plant control device 3 received via the communication I/F 112, and executes, for example, A/D conversion processing, smoothing processing (noise cancellation), or normalization processing. Furthermore, the data obtaining unit 101 transfers the above processed measurement data of the various sensors to the plant database 108 via the internal bus 113. Thus, the plant database 108 stores data of the plant 5 which is the measurement data of the various sensors in chronological order.

The data preprocessing unit 102 accesses the plant database 108 via the internal bus 113, imports data which is an input of diagnosis processing by ART described below from the data stored in the plant database 108, and further standardizes data between 0 and 1 such that the data becomes an input of ART processing. Furthermore, the data preprocessing unit 102 transfers the standardized data to the abnormality rate calculating unit 103 via the internal bus 113.

The abnormality rate calculating unit 103 imports the standardized data transferred from the data preprocessing unit 102 via the internal bus 113, and calculates an abnormality rate of the entire diagnosis target plant 5 and an abnormality contribution rate of each signal. In this regard, each signal corresponds to the above measurement data of the various sensors included in the standardized data.

The ART control unit 104 imports the abnormality rate calculated by the abnormality rate calculating unit 103 via the internal bus 113, and controls an execution timing of the ART processing according to an abnormality rate output tendency.

The ART processing unit 105 executes the ART processing. The abnormality determining unit 106 imports category information which is an output result of the ART processing unit 105 via the internal bus 113, and determines a normality or an abnormality based on the category information. Furthermore, the abnormality determining unit 106 transfers a determination result of the normality or the abnormality to the diagnosis result database 110 via the internal bus 113. Thus, the diagnosis result database 110 stores the determination result of the normality or the abnormality transferred by the abnormality determining unit 106 via the internal bus 113 as a diagnosis result of the plant 5. The category database 109 stores characteristic data of each category used for processing of the abnormality rate calculating unit 103 and the abnormality determining unit 106.

The plant abnormality diagnosis device 2 uses the ART for the diagnosis processing of the diagnosis target plant 5 as described above. First, the ART processing which is executed by the ART processing unit 105, determination of an ART processing result executed by the abnormality determining unit 106, and output processing of a diagnosis result of the diagnosis result database 110 will be described.

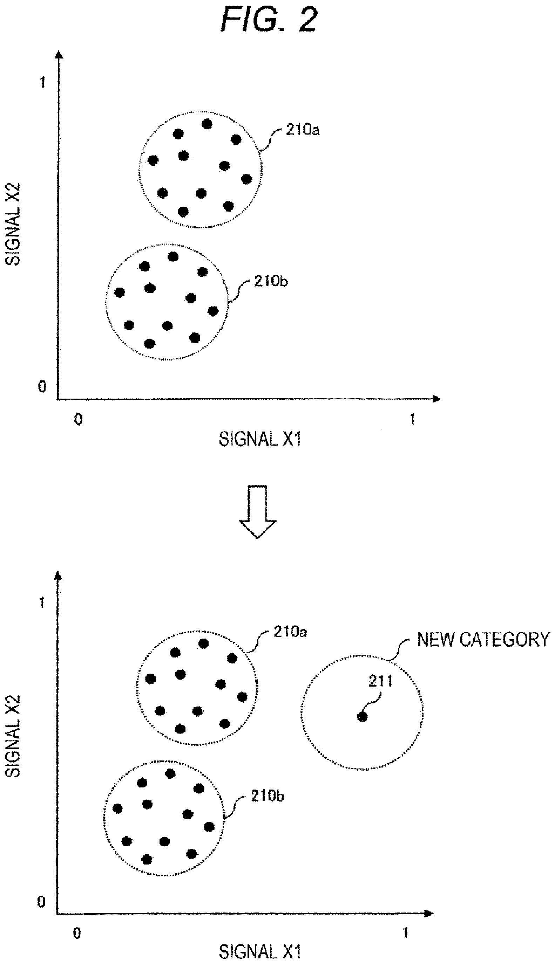

The ART is one of clustering methods. FIG. 2 is an explanatory diagram of a concept of the clustering. An upper diagram of FIG. 2 illustrates a state where values of two types of signals (a signal X1 and a signal X2) are plotted in a two-dimensional space, i.e., a correlation of these two signals (the signal X1 and the signal X2) . As illustrated in the upper diagram of FIG. 2, each signal (data) of the signal X1 which is a horizontal axis and the signal X2 which is a vertical axis is standardized between 0 and 1 by the data preprocessing unit 102.

According to clustering, data having a mutually close relationship among the data plotted on the space as illustrated in the upper diagram of FIG. 2 is collectively defined as a group (cluster). In an example illustrated in the upper diagram of FIG. 2, 210a and 210b indicated by circles each denote one group. According to the ART, each group will be referred to as a category, and respectively different category numbers are allocated to the category 210a and the category 210b so as to be identifiable. Hence, the output of the ART is a category number allocated to input data. Data to which the same category number is allocated indicates a tendency of similarity. Furthermore, the example illustrated in the upper diagram of FIG. 2 describes a case of a two dimension, i.e., the case where the two signals (the signal X1 and the signal X2) are inputs for ease of description. According to actual abnormality diagnosis of the plant 5, multiple signals are set as inputs, and clustering processing is performed in a multidimensional space.

When abnormality diagnosis of the plant 5 is performed by the ART, category determination processing of the ART processing unit 105 is performed by using, as an input, plant data (the above measurement data of the various sensors) defined as normal first prior to diagnosis processing. This processing is referred to as learning. The category numbers outputted by the learning processing indicates a normality. Next, diagnosis plant data is set to an input of the ART processing unit 105 to perform the category determination processing, and the abnormality determining unit 106 performs normality/abnormality determination processing based on the category outputted from the ART processing unit 105. When the input data 211 is outside the category 210a and the category 210b defined as normal as illustrated in a lower diagram of FIG. 2, the plant 5 is in a state different from characteristics during a normal time, so that it is possible to decide the abnormality According to the ART processing, when data which does not correspond to existing categories is inputted, a new category is created and allocated a number. That is, when category numbers determined by the ART processing unit 105 are different from the category numbers during learning, the abnormality determining unit 106 determines that the plant 5 is in an abnormal state. In addition, when the plant 5 is a newly installed plant, the above learning processing is performed during a test run of the plant 5. Furthermore, when the plant abnormality diagnosis device 2 is newly assembled in the existing plant 5, learning may be performed by using past operation record data (plant data).

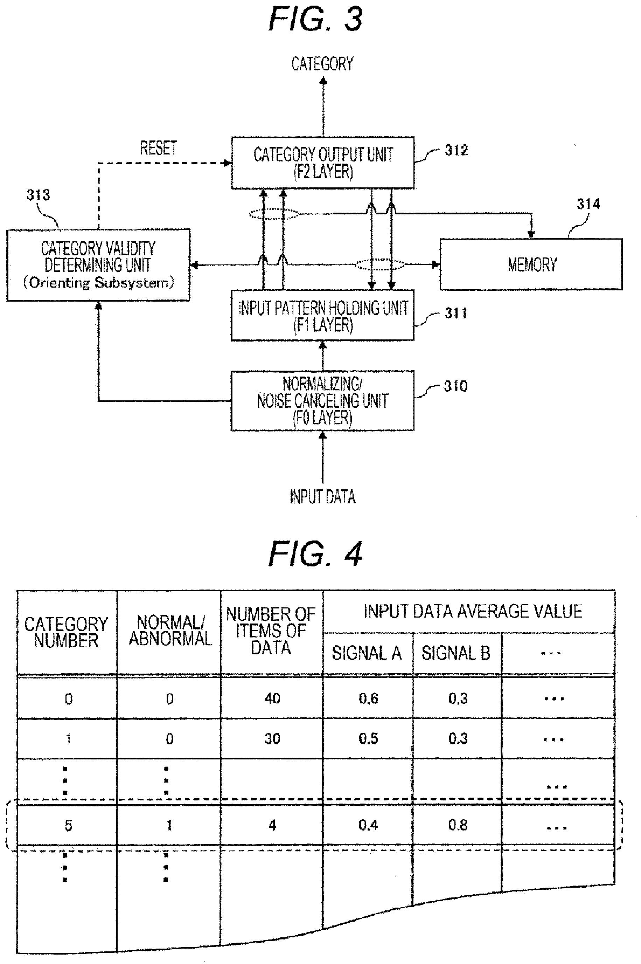

Next, details of the clustering processing of the ART processing unit 105 will be described. FIG. 3 is a configuration diagram of main units of the ART processing unit 105 illustrated in FIG. 1.

As illustrated in FIG. 3, the ART processing unit 105 includes at least a normalizing/noise canceling unit (F0 layer) 310, an input pattern holding unit (F1 layer) 311, a category output unit (F2 layer) 312, a category validity determining unit (Orienting Subsystem) 313, and a memory 314. An algorithm (the ART processing) executed by the ART processing unit 105 includes following step 1 to step 6.

Step 1: The normalizing/noise canceling unit (F0 layer) 310 normalizes a magnitude of an input vector to 1 and cancels noise.

Step 2: The input pattern holding unit (F1 layer) 311 stores data in a short term by using a recurrence formula (also referred to as a difference equation).

Step 3: The category output unit (F2 layer) 312 selects category candidates by comparing the inputted input data and a weight coefficient stored in the memory 314.

Step 4: The category validity determining unit (Orienting Subsystem) 313 evaluates validity of the categories selected by the category output unit (F2 layer) 312. When the category is determined as valid, the input data is classified into this category, and the flow moves to step 6. When the category is not determined as valid, this category is reset (is removed from the category candidates), and processing of selecting candidate category numbers is performed again from step 2.

Step 5: When all existing categories are reset (removed from the category candidates), i.e., when it is determined in step 4 that there is no valid category, a new category is created. In this case, a weight coefficient associated with the new category is newly defined. The newly defined weight coefficient is stored in the memory 314.

Step 6: When the input data is classified into the category, the weight coefficient associated with corresponding category is updated. The weight coefficient is updated by the following equation (1).

$$WJ(new) = Kw \times p + (1-Kw) \times WJ(old) \cdots (1)$$

In this regard, WJ(new) is a weight coefficient associated with a category J, WJ(old) is a past weight coefficient, p is input data (or data deriving from the input data), and Kw is a learning rate parameter and determines the degree of reflection of the input data in the new weight coefficient.

A flow of the clustering processing of the ART processing unit 105 has been described above. The ART processing unit 105 outputs the category number associated with the input data according to this processing.

A feature of the clustering processing of the ART processing unit 105 is the processing in step 5. According to the processing in step 5, when the input data has a different tendency from existing categories (clusters), the existing categories can be kept, and a new category can be newly created. Consequently, it is possible to create a category having a new data tendency while storing the previously learned categories.

According to the above clustering processing of the ART processing unit 105, the category number associated with the input data is outputted, and the abnormality determining unit 106 determines whether the category number outputted by the ART processing unit 105 is normal or abnormal.

The plant abnormality diagnosis device 2 executes the learning processing by using normal data in advance before performing the diagnosis processing. Information of the normal category defined by the learning processing is stored in the category database 109. FIG. 4 is a diagram illustrating a data structure of the category database 109 illustrated in FIG. 1. As illustrated in FIG. 4, the category database 109 stores a "category number" field, a "normal/abnormal" field indicating a normality or an abnormality, a "number of items of data" field indicating a total number of items of data per category number, and an "input data average value" field indicating an average value of each signal which is measurement data of the various sensors installed in the various devices and the pipes which constitute the plant 5 in a table format. That is, a flag indicating the normality/abnormality as 0/1, the number of items of corresponding input data, and an average value of the input data are stored per category number. When, for example, the "category number" is "0", "0" indicating that the category number is the normal category defined by the learning processing is stored in the "normal/abnormal" field, "40" is stored in the "number of items of data" field, and "0.6" which is the average value of a "signal A" and "0.3" which is an average value of a "signal B" are stored in an "input data average value" field. Furthermore, when the "category number" is "5", "1" indicating that the category number does not correspond to the normal category defined by the learning processing and indicating an abnormality is stored in the "normal/abnormal" field, "4" is stored in "the number of items of data" field, and "0.4" which is the average value of the "signal A" and "0.8" which is the average value of the "signal B" are stored in the "input data average value" field.

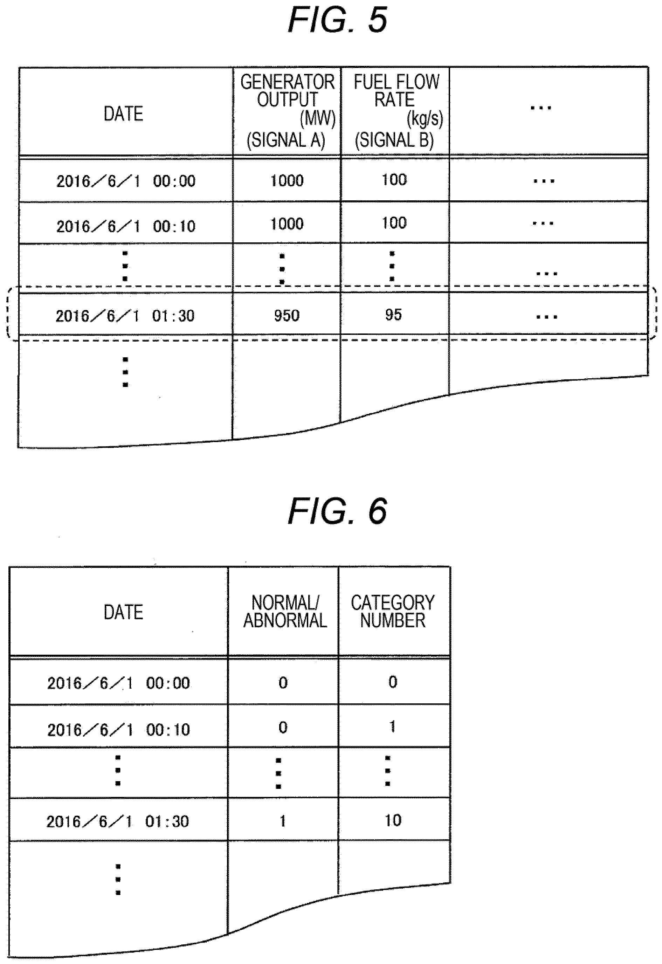

Hereinafter, the plant database 108 will be described. FIG. 5 is a diagram illustrating the data structure of the plant database 108 illustrated in FIG. 1. FIG. 5 illustrates a case of a power plant as an example of the plant 5. As illustrated in FIG. 5, the plant database 108 stores a "date" field, a "generator output (MW) (signal A)" field, and a "fuel flow rate (kg/s) (signal B)" field in the table format. In addition, although not illustrated, a plurality of data item fields such as a "gas temperature" field and a "gas flow rate" field measured by the various sensors is provided. As illustrated in FIG. 5, when, for example, the "date" is "00:00 on June 1, 2016", "1000" is stored in the "generator output (MW) (signal A)" field and "100" is stored in the "fuel flow rate (kg/s) (signal B)" field. Furthermore, when the "date" is "01:30 on June 1, 2016", "950" is stored in the "generator output (MW) (signal A)" field and "95" is stored in the "fuel flow rate (kg/s) (signal B)" field.

Meanwhile, during the diagnosis processing, the above abnormality determining unit 106 determines whether the category number outputted by the ART processing unit 105 is normal or abnormal based on the data stored in the category database 109. That is, the abnormality determining unit 106 can search the category database 109 by using as search keys the category numbers imported from the ART processing unit 105 via the internal bus 113, and decide whether the category number is normal or abnormal according to whether or not the category number is registered as a normal category. The abnormality determining unit 106 decides that the category number which is not registered as normal in the category database 109 is abnormal, and stores this information in the category database 109. The above example illustrated in FIG. 4 is a case where the "category number" of "5" is decided as abnormal. In this case, "1" is stored in a "normal/abnormal" field. Furthermore, the abnormality determining unit 106 calculates for each signal the average value of the input data of each category, and outputs the average value to the category database 109 via the internal bus 113. Furthermore, when the ART processing unit 105 determines that the "category number" is "5" during the diagnosis processing, the abnormality determining unit 106 increases a value of the "number of items of data" field and updates the "input data average value" for the data whose "category number" stored in the category database 109 is "5".

Furthermore, the abnormality determining unit 106 stores a category determination result in the diagnosis result database 110 via the internal bus 113 in chronological order. FIG. 6 is a diagram illustrating a data structure of the diagnosis result database 110 illustrated in FIG. 1. As illustrated in FIG. 6, the diagnosis result database 110 stores a "date" field, a "normal/abnormal" field, and a "category number" field in the table format. When, for example, the "date" is "00:00 on June 1, 2016", "0" which is a result determined as normal by the abnormality determining unit 106 is stored in the "normal/abnormal" field, and "0" which is the category number outputted by the ART processing unit 105 is stored in the "category number" field. Furthermore, when the "date" is "01:30 on June 1, 2016", "1" which is a result determined as abnormal by the abnormality determining unit 106 is stored in the "normal/abnormal" field, and "10" which is the category number outputted by the ART processing unit 105 is stored in the "category number" field.

The input/output control unit 107 (FIG. 1) which constitutes the plant abnormality diagnosis device 2 outputs data stored in the above diagnosis result database 110 and category database 109 as a diagnosis result to the input/output device 4. A display mode (display screen example) of the display device which constitutes the input/output device 4 will be described below. Furthermore, the input/output control unit 107 imports data related to an abnormal event inputted by the user via the input/output device 4. The plant abnormality diagnosis system 1 sends an output indicating that an abnormality occurs in the plant 5, and can register this output in the plant abnormality diagnosis system 1 when an abnormality cause is found later. Data of the abnormality cause inputted by the user via the input/output device 4 is stored in the abnormal event database 111 via the input/output control unit 107 and the internal bus 113.

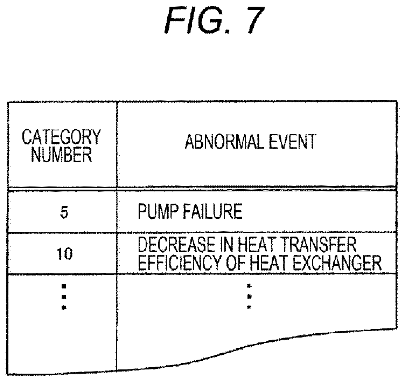

FIG. 7 is a diagram illustrating a data structure of the abnormal event database 111 illustrated in FIG. 1. As illustrated in FIG. 7, the abnormal event database 111 stores a "category number" field, and an "abnormal event" field in the table format. That is, the abnormal event database 111 stores data of a text format related to the abnormal event registered by the user via the input/output device 4 in association with the category number outputted by the ART processing unit 105. When, for example, the "category number" is "5", a "pump failure" is stored in the "abnormal event" field. When the "category number" is "10", a "decrease in heat transfer efficiency of heat exchanger" is stored in the "abnormal event" field. When the above abnormality determining unit 106 determines the abnormality, the input/output control unit 107 accesses the abnormal event database 111 via the internal bus 113, and searches whether or not there is the same abnormal event as the abnormal event which is stored in the abnormal event database 111 and has previously occurred. The category number is used as a search key for the searching. When there is the same category number as the category number outputted by the ART processing unit 105 in the abnormal event database 111, data (the data of the text format) of a corresponding abnormal event is read and outputted to the input/output device 4. According to this processing, not only when determining whether the plant 5 is normal or abnormal but also when the abnormal event is the same as the abnormal event which has previously occurred, the plant abnormality diagnosis system 1 can provide this information (contents of the abnormal event), too, to the user.

Although the flow of the diagnosis processing by the ART has been described above, the plant abnormality diagnosis system 1 according to the present embodiment does not cyclically execute the above ART processing executed by the ART processing unit 105 and the plant diagnosis processing of the abnormality determining unit 106 at fixed time intervals, but performs the processing only when the abnormality rate calculated by the abnormality rate calculating unit 103 described below satisfies execution conditions. Category determination processing of the ART processing unit 105 requires a calculation load for convergence calculation. Hence, the processing of the ART processing unit 105 is not executed every step, and the ART control unit 104 activates the ART processing unit 105 at a point of time at which it is determined that the ART processing unit 105 is in a state suitable to the category determination processing.

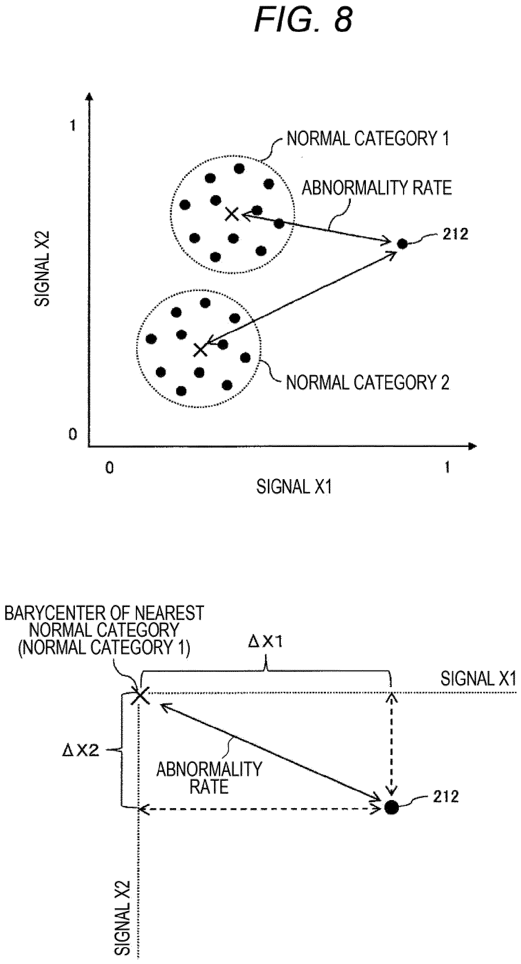

First, an abnormality rate calculating method of the abnormality rate calculating unit 103 will be described. FIG. 8 is a diagram illustrating the abnormality rate calculating method. For ease of description, an upper diagram of FIG. 8 illustrates that categories are created on the two-dimensional space by using two signals (the signal X1 and the signal X2) as inputs. In this case, it is assumed that a normal category 1 and a normal category 2 indicating a normality are created by the learning processing. Next, when input data 212 is received via the communication I/F 112 during the diagnosis processing, the abnormality rate is defined as a distance from a barycenter of the nearest category. In the example illustrated in the upper diagram of FIG. 8, the normal category 1 is closer to the input data 212 mapped on the two-dimensional space than the normal category 2. Hence, the abnormality rate calculating unit 103 calculates the abnormality rate of the entire diagnosis target plant 5 based on the distance to the input data 212 when the barycenter of the normal category 1 is a reference. Furthermore, it is also possible to calculate the abnormality rate of each signal (the signal X1 and the signal X2) based on the positional relationship between the input data 212 on the two-dimensional space and the normal category.

A lower diagram of FIG. 8 illustrates that a barycenter X of the normal category 1 which is the nearest category in the upper diagram of FIG. 8 and a plot point of the input data 212 are extracted and enlarged. In this case, a distance difference in each axial direction, i.e., between an axial direction of the signal X1 and an axial direction of the signal X2 indicates a difference from a normal state of each signal (the signal X1 and the signal X2). Hence, in the lower diagram of FIG. 8, an abnormality contribution rate Rn of each signal (the signal X1 and the signal X2) is calculated by using the following equation (2) based on a distance difference $\Delta X1$ in the axial direction between the barycenter X of the normal category 1 which is the nearest category and the signal X1 of the input data 212, and a distance difference $\Delta X2$ in the axial direction between the barycenter X of the normal category 1 which is the nearest category and the signal X2 of the input data 212.

[Mathematical 1]

$$Rn = \frac{\Delta Xn}{\sum_{i}^{n} \Delta Xi} \qquad \cdots (2)$$

Hence, an abnormality contribution rate $R_{X1}$ of the signal X1 is calculated as $\Delta X1/(\Delta X1 + \Delta X2)$, and an abnormality contribution rate $R_{X2}$ of the signal X2 is calculated as $\Delta X2/(\Delta X1 + \Delta X2)$.

Furthermore, when the above abnormality rate of the entire diagnosis target plant 5 is A, an abnormality rate Sn of a signal n is calculated by using the abnormality contribution rate Rn and using the following equation (3).

$$Sn = A \times Rn \qquad \cdots (3)$$

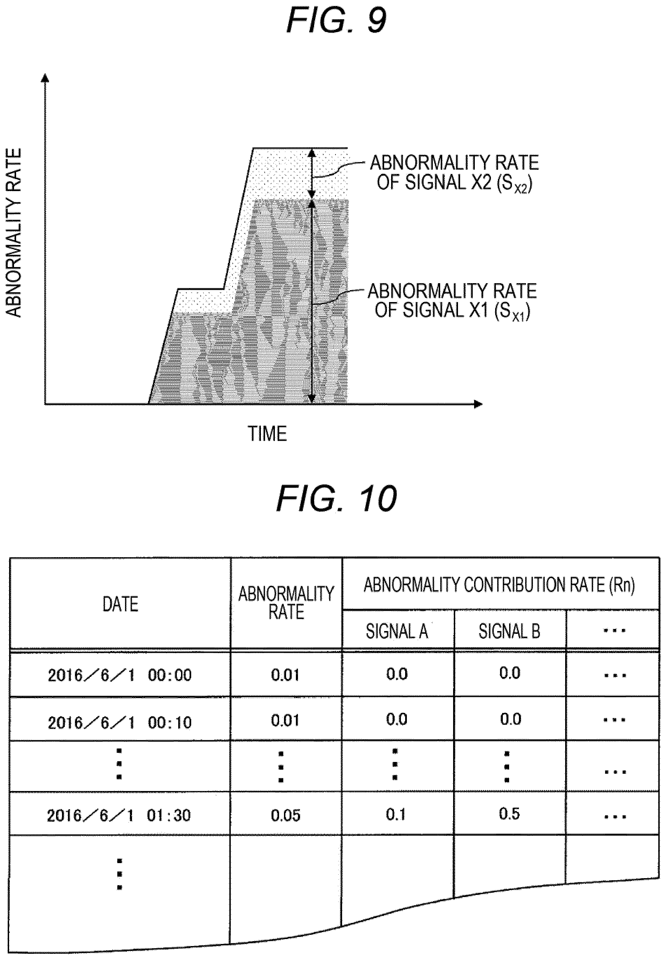

Hence, an abnormality rate $S_{X1}$ of the signal X1 is calculated as $(A + \Delta X1)/(\Delta X1 + \Delta X2)$, and an abnormality contribution rate $S_{X2}$ of the signal X2 is calculated as $(A + \Delta X2)/(\Delta X1 + \Delta X2)$. A value obtained by calculating a total of the abnormality rate Sn of each signal has a relationship equal to an abnormality rate A of the entire diagnosis target plant 5. Consequently, the abnormality rate calculated by the abnormality rate calculating unit 103 can be displayed in a display mode illustrated in FIG. 9. FIG. 9 is a diagram illustrating a temporal change of the abnormality rate, and illustrates that a vertical axis indicates the abnormality rate, a horizontal axis indicates a time and the abnormality rate Sn of each signal (the signal X1 and the signal X2) is colored and displayed. As described above, a total of the abnormality rate $(S_{X1})$ of the signal X1 and the abnormality rate $(S_{X2})$ of the signal X2 is the abnormality rate A of the entire diagnosis target plant 5. That is, the abnormality rate Sn of each signal (the signal X1 and the signal X2) can be evaluated as a breakdown of each signal (the signal X1 and the signal X2) for the abnormality rate A of the entire diagnosis target plant 5. According to this display mode, when the value of the abnormality rate Sn is higher, it is possible to easily decide visually which signal n significantly deviates from the normal state.

As described above, the abnormality rate calculating unit 103 calculates the abnormality rate of the input data received via the communication I/F 112 during the diagnosis processing, and stores these values in the diagnosis result database 110. FIG. 10 is a diagram illustrating a data structure of the diagnosis result database 110. As illustrated in FIG. 10, the diagnosis result database 110 stores a "date" field, an "abnormality rate" field indicating the abnormality rate A of the entire diagnosis target plant 5, and an "abnormality contribution rate (Rn)" indicating the abnormality contribution rate (Rn) of each signal n in the table format. That is, the abnormality rate A of the entire diagnosis target plant 5, and the abnormality contribution rate (Rn) of each signal n are stored in a chronological order format.

When, for example, the "date" is "00:00 on June 1, 2016", "0.01" is stored in the "abnormality rate" field indicating the abnormality rate A of the entire diagnosis target plant 5, and "0.0" which is an abnormality contribution rate $R_A$ of the "signal A" and "0.0" which is an abnormality contribution rate $R_B$ of the "signal B" are stored in the "abnormality contribution rate (Rn)" field. Furthermore, when the "date" is "01:30 on June 1, 2016", "0.05" is stored in the "abnormality rate" field indicating the abnormality rate A of the entire diagnosis target plant 5, and "0.1" which is an abnormality contribution rate $R_A$ of the "signal A" and "0.5" which is an abnormality contribution rate $R_B$ of the "signal B" are stored in the "abnormality contribution rate (Rn)" field. In addition, the present embodiment employs a configuration where the abnormality contribution rate (Rn) of each signal n is stored. However, instead of this configuration, there may be employed a configuration where the abnormality rate (Sn) of each signal n is stored.

Next, the ART control unit 104 illustrated in FIG. 1 controls an execution timing of the ART processing unit 105 based on data of the abnormality rate outputted by the abnormality rate calculating unit 103.

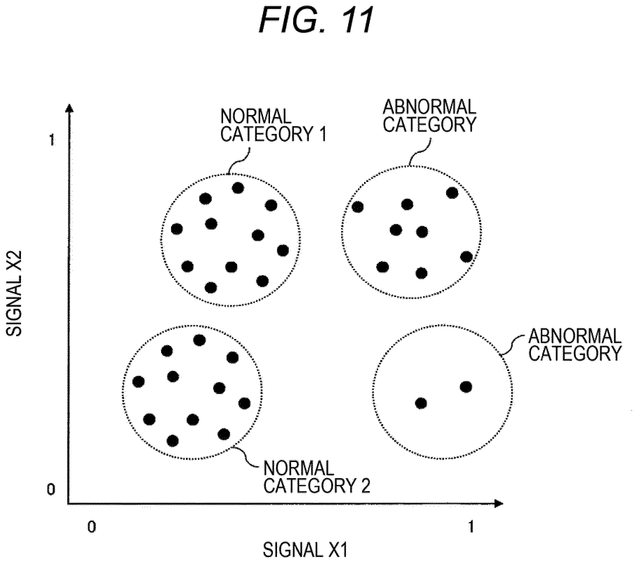

When the ART processing unit 105 newly creates a category by the ART processing, if a new category (abnormal category) is created at a point of time at which data outside the existing categories (normal categories) is accumulated, efficiency improves. FIG. 11 is an explanatory diagram of the concept of clustering of the ART. As illustrated in FIG. 11 in particular, a good case is a case where multiple categories exist at positions concentrating on the two-dimensional space. In view of this, when one of the following conditions is satisfied, the ART control unit 104 activates and causes the ART processing unit 105 to execute the ART processing.

Condition 1: The number of times that the abnormality rate A of the entire diagnosis target plant 5 exceeds a threshold is a certain number of times or more Condition 2: The number of times that the abnormality rate Sn of the signal n exceeds a threshold is a certain number of times or more (counted per signal) Condition 3: The number of times that a category is selected as the nearest normal category is a certain number of times or more (counted per category).

In this regard, the threshold of each condition is appropriately set based on calculation results of the abnormality rate A of the entire diagnosis target plant 5 and the abnormality rate Sn of the signal n taking into account a data fluctuation (characteristics of data) during the above learning processing, for example.

The abnormality rate A of the entire diagnosis target plant 5, the abnormality rate Sn of the signal n and the nearest normal category are all parameters calculated by the abnormality rate calculating unit 103. The ART control unit 104 imports the output of the abnormality rate calculating unit 103 via the internal bus 113 and counts the number of times of the output to determine the execution timing (activation timing) of the ART processing unit 105. Processing after the activation of the ART processing unit 105 determines a normality/abnormality by the ART processing.

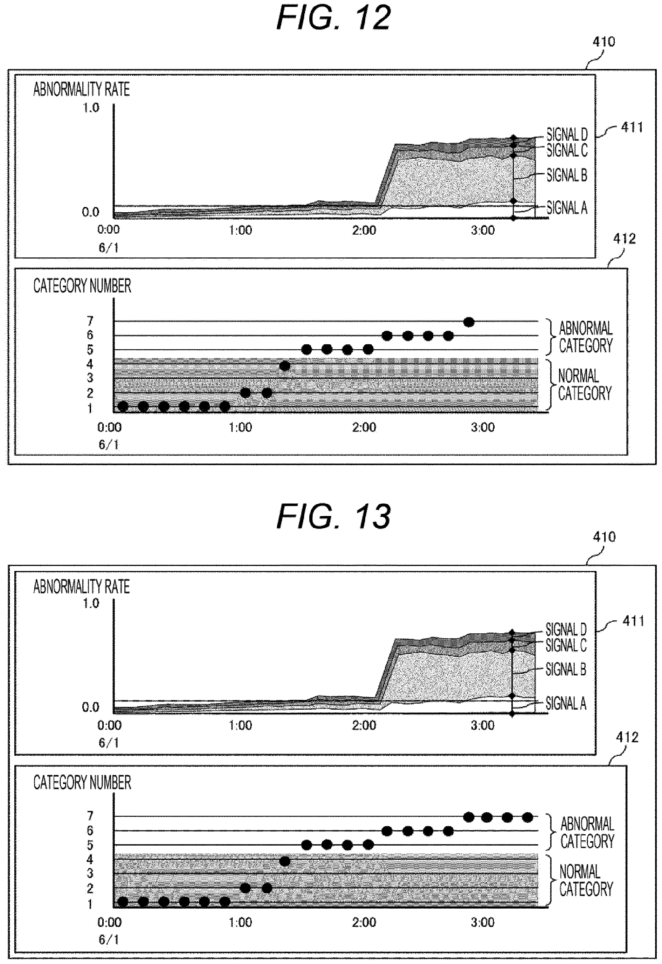

Next, a display screen of the display device of the input/output device 4 which constitutes the plant abnormality diagnosis system 1 will be described. FIG. 12 illustrates an example of the display screen which displays a temporal change of the abnormality rate and temporal changes of category numbers. As illustrated in FIG. 12, a display screen 410 of the display device which constitutes the input/output device 4 includes a first display region 411 which displays a temporal change of the abnormality rate Sn of the signal n, and a second display region 412 which displays temporal changes of the category numbers outputted by the ART processing unit 105.

In an example illustrated in FIG. 12, the horizontal axis indicates a date, and the vertical axis indicates the abnormality rate in the first display region 411, and temporal changes of an abnormality rate $S_A$ of the signal A, an abnormality rate $S_B$ of the signal B, an abnormality rate $S_C$ of a signal C, and an abnormality rate $S_D$ of a signal D are displayed by different colors. A total of the abnormality rate $S_A$ of the signal A, the abnormality rate $S_B$ of the signal B, the abnormality rate $S_C$ of the signal C, and the abnormality rate $S_D$ of the signal D is the abnormality rate A of the entire diagnosis target plant 5. Therefore, the temporal change of the abnormality rate A of the entire diagnosis target plant 5 and the breakdown of the abnormality rate Sn of each signal n can be easily learned visually by the user. In the example illustrated in FIG. 12, the abnormality rate A of the entire diagnosis target plant 5 rapidly increases from 2:00 on June 1, and this rapid increase is greatly influenced by the signal B.

Furthermore, in the example illustrated in FIG. 12, the horizontal axis indicates the date and the vertical axis indicates the category number in the second display region 412, and the temporal changes of the category numbers outputted from the above ART processing unit 105 indicate the normal category and the abnormal category identifiably. In the example illustrated in FIG. 12, the category numbers 1 to 4 are the normal categories, and category numbers (category numbers 5 to 7) larger than the normal categories are the abnormal categories.

FIG. 13 illustrates a state where the ART processing unit 105 executes category determination processing, and the number of items of plot data of the category number increases compared to FIG. 12. As illustrated in FIG. 13, the temporal change of the abnormality rate displayed in the first display region 411 is the same as that in FIG. 12. In a case of the temporal changes of the category numbers displayed in the second display region 412, the number of items of plot data of the category number 7 increases by three compared to FIG. 12. Thus, while the temporal change of the abnormality rate A of the entire diagnosis target plant 5 and the abnormality rate Sn of each signal n displayed in the first display region 411 are calculated at fixed time intervals, and updated and displayed on the screen on a regular basis, data accumulated since previous execution is displayed as the temporal change of the category number displayed in the second display region 412 at a point of time of execution of the ART processing unit 105.

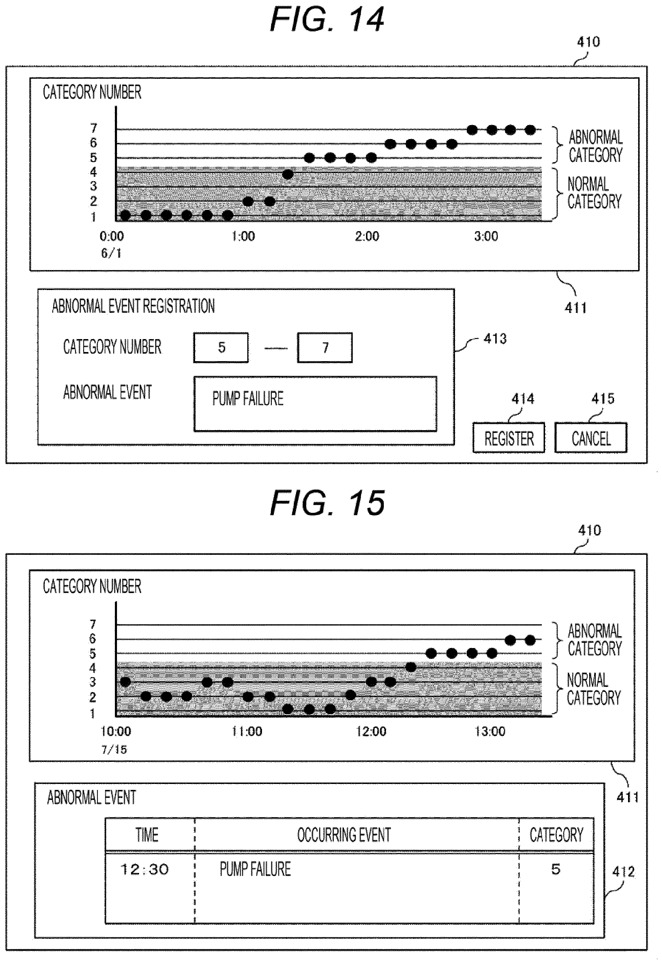

FIG. 14 illustrates an example of the display screen during registration of an abnormal event. As illustrated in FIG. 14, the display screen 410 of the display device which constitutes the input/output device 4 includes the first display region 411 which displays temporal changes of the category numbers outputted by the ART processing unit 105, an input region 413 which receives a user's input of abnormal event registration via the input device which constitutes the input/output device 4, a registration button 414, and a cancel button 415.

As illustrated in FIG. 14, the temporal changes of the category numbers displayed in the first display region 411 are the same as the above display contents displayed in the second display region 412 illustrated in FIG. 13. The input region 413 is a region which allows the user to input an abnormal event, and includes a region in which the "category number" is selected and inputted and a region in which the abnormal event is inputted in a text format. FIG. 14 illustrates an example of a state where the category numbers 5 to 7 are selected and inputted by the user via the input device which constitutes the input/output device 4 among the temporal changes of the category numbers displayed on the first display region 411 and outputted from the ART processing unit 105. Furthermore, FIG. 14 illustrates a state where a "pump failure" is inputted to the region in which the abnormal event is inputted in the text format. When a mouse pointer is placed on the registration button 414 by a user's operation of the mouse which is the input device and the mouse is clicked in this screen display state, the registration button 414 becomes active. Thus, the "pump failure" is stored in the "abnormal event" field associated with "5", "6", and "7" of the "category number" field in the abnormal event database 111 illustrated in above FIG. 7 via the input/output control unit 107 and the internal bus 113. In addition, there may be employed a configuration where the user selects and inputs a desired category number from a pulldown menu in the region in which the "category number" is selected and inputted.

FIG. 15 illustrates an example of the display screen which displays temporal changes of the category numbers and an abnormal event which is a diagnosis result. FIG. 15 illustrates an example of the display screen on "July 15" which is one month or more after "June 1" on which the above user has performed "abnormal event registration". FIG. 15 illustrates a state where the category number deviates from the normal category at "12:30 on July 15" as indicated by the temporal change of the category number displayed in the first display region 411, and the ART processing unit 105 outputs "5" as the category number. As illustrated in FIG. 14, information of the abnormal event is previously registered in association with the category number "5" in the abnormal event database 111. Therefore, the second display region 412 displays that the "pump failure" which is an occurring event occurs as the "abnormal event" at a time "12:30", and the category number is "5". Thus, the category numbers outputted from the ART processing unit 105 is used and, as long as an occurring abnormality has been previously experienced, the input/output control unit 107 accesses the abnormal event database 111 via the internal bus 113, and displays information of the abnormality cause stored in association with the category number in the abnormal event database 111 on the screen of the display device which constitutes the input/output device 4, so that it is possible to provide the information to the user. Furthermore, the user can consider a handling operation and operation contents referring to abnormality information provided by the plant abnormality diagnosis system 1.

As described above, the plant abnormality diagnosis device 2 which constitutes the plant abnormality diagnosis system 1 according to the present embodiment calculates the abnormality rate A of the entire plant 5 and the abnormality rate Sn of each signal n based on a plurality of items of measurement data (signals) received from the plant control device 3 and obtained from the various sensors installed in the various devices and the pipes which constitute the diagnosis target plant 5. Subsequently, category determination processing is executed by the ART processing according to a tendency of the abnormality rate A of the entire plant 5 and/or the abnormality rate Sn of each signal n.

As described above, according to the present embodiment, it is possible to provide a plant abnormality diagnosis device and a plant abnormality diagnosis system which can determine an abnormality of an entire plant early during abnormality diagnosis of the plant by using ART.

Furthermore, according to the present embodiment, instead of performing the category determination processing by the ART at the fixed time intervals, execution of determination processing is controlled according to the tendency of the abnormality rate or at a point of time at which data of a high abnormality rate is accumulated. Consequently, it is possible to reduce a calculation load required for the determination processing, reduce a total processing time, and determine the abnormality of the entire plant early.

Furthermore, the abnormality rate of the entire diagnosis target plant and, in addition, the abnormality rate of each signal are displayed on the display screen of the display device, so that it is possible to easily learn visually which signal deviates from the normal categories.

Furthermore, the categories determined by the ART processing and information related to an abnormal event are associated and stored in the abnormal event database. Consequently, in a case of the same abnormality as an abnormality having previously occurred, the above abnormality rate of the entire diagnosis target plant, the abnormality rate of each signal, and information such as the abnormal event can be provided to the user and utilized to consider an abnormality countermeasure.

In addition, the present invention is not limited to the above embodiment, and includes various modifications.

For example, the above embodiment has been described in detail to describe the present invention for ease of understanding, and is not necessarily limited to those including all described components.

Reference Signs List

| 1 | plant abnormality diagnosis system |
| 2 | plant abnormality diagnosis device |
| 3 | plant control device |
| 4 | input/output device |
| 5 | plant |
| 101 | data obtaining unit |
| 102 | data preprocessing unit |
| 103 | abnormality rate calculating unit |
| 104 | ART control unit |
| 105 | ART processing unit |
| 106 | abnormality determining unit |
| 107 | input/output control unit |
| 108 | plant database |
| 109 | category database |
| 110 | diagnosis result database |
| 111 | abnormal event database |
| 112 | communication I/F |
| 113 | internal bus |
| 210a, 210b | category |
| 211, 212 | input data |
| 310 | normalizing/noise canceling unit (F0 layer) |
| 311 | input pattern holding unit (F1 layer) |
| 312 | category output unit (F2 layer) |
| 313 | category validity determining unit (Orienting Subsystem) |
| 314 | memory |
| 410 | display screen |
| 411 | first display region |
| 412 | second display region |
| 413 | input region |
| 414 | registration button |
| 415 | cancel button |

**Claims**

1. A plant abnormality diagnosis device (2), comprising:

    an abnormality rate calculating unit (103) configured to calculate an abnormality rate of an entire diagnosis target plant (5) from a plurality of items of measurement data of various sensors installed in the diagnosis target plant (5) based on a distance difference in a space between data and the plurality of items of measurement data, the data belonging to a category determined during a learning processing based on data during a normal time of the diagnosis target plant (5) by an Adaptive Resonance Theory algorithm;
    an ART processing unit (105) configured to execute category determination processing by the Adaptive Resonance Theory algorithm; and
    an ART control unit (104) configured to control an activation timing of the ART processing unit (105),
    wherein the abnormality rate calculating unit (103) is configured to calculate an abnormality rate of each of the plurality of items of measurement data based on a distance difference in a signal direction between the data and each of the plurality of items of measurement data, the data belonging to the category determined based on the data during the normal time of the diagnosis target plant (5), and
    **characterized in that**
    the ART control unit (104) is configured to activate the ART processing unit (105),
    when a number of times that the abnormality rate of the entire diagnosis target plant (5) calculated by the abnormality rate calculating unit (103) exceeds a predetermined threshold is a fixed number of times or more, wherein the predetermined threshold is appropriately set based on calculation results of the abnormality rate of the entire diagnosis target plant (5) taking into account a data fluctuation during the learning processing.

2. The plant abnormality diagnosis device (2) according to claim 1 wherein the ART control unit (104) is further configured to activate the ART processing unit (105) when a number of times that the abnormality rate of each of the plurality of items of measurement data calculated by the abnormality rate calculating unit (103) exceeds a second predetermined threshold is a second fixed number of times or more.

3. The plant abnormality diagnosis device (2) according to claim 1 wherein the ART control unit (104) is further configured to activate the ART processing unit (105) when a number of times that a category indicating a normality being in a nearest distance to the plurality of items of measurement data in the space is selected is a third fixed number of times or more

4. A plant abnormality diagnosis system (1) comprising:

   the plant abnormality diagnosis device (2) according to any of claims 1 to 3;
   a plant control device (3) configured to control a process of the diagnosis target plant (5) and to transmit to the plant abnormality diagnosis device (2) a plurality of items of measurement data of various sensors installed in the diagnosis target plant (5); and
   an input/output device (4) which includes an input unit and a display unit (410).

5. The plant abnormality diagnosis system (1) according to claim 4,
   wherein the display unit (410) includes a first display region (411) configured to display a temporal change of the abnormality rate of each of the plurality of items of measurement data calculated by the abnormality rate calculating unit (103), and a second display region (412) configured to display a temporal change of a category number obtained by category determination processing by the ART processing unit (105).

6. The plant abnormality diagnosis system according to claim 4,
   wherein the display unit (410) includes a first display region (411) configured to display a temporal change of a category number obtained by category determination processing by the ART processing unit (105), and an input region (413) configured to receive an input of abnormal event registration via the input unit.


**Patentansprüche**

1. Anlagenanomalie-Diagnosevorrichtung (2) die Folgendes umfasst:

   eine Anomalieraten-Berechnungseinheit (103), die konfiguriert ist, eine Anomalierate einer gesamten Diagnosezielanlage (5) aus mehreren Messdatenelementen verschiedener Sensoren, die in der Diagnosezielanlage (5) installiert sind, basierend auf einer Abstandsdifferenz in einem Raum zwischen Daten und den mehreren Messdatenelementen zu berechnen, wobei die Daten zu einer Kategorie gehören, die während eines Lernprozesses basierend auf Daten während einer normalen Zeit der Diagnosezielanlage (5) durch einen Algorithmus der adaptiven Resonanztheorie bestimmt worden ist;
   eine ART-Prozesseinheit (105), die konfiguriert ist, den Kategoriebestimmungsprozess durch den Algorithmus der adaptiven Resonanztheorie auszuführen; und
   eine ART-Steuerungseinheit (104), die konfiguriert ist, eine Aktivierungszeitvorgabe der ART-Prozesseinheit (105) zu steuern,
   wobei die Anomalieraten-Berechnungseinheit (103) konfiguriert ist, eine Anomalierate jedes der mehreren Messdatenelemente basierend auf einer Abstandsdifferenz in einer Signalrichtung zwischen den Daten und jedem der mehreren Messdatenelemente zu berechnen, wobei die Daten zu der Kategorie gehören, die basierend auf den Daten während der normalen Zeit der Diagnosezielanlage (5) bestimmt worden ist, und
   **dadurch gekennzeichnet, dass**
   die ART-Steuerungseinheit (104) konfiguriert ist, die ART-Prozesseinheit (105) zu aktivieren,
   wenn eine Anzahl, in der die Anomalierate der gesamten Diagnosezielanlage (5), die von der Anomalieraten-Berechnungseinheit (103) berechnet worden ist, einen vorbestimmten Schwellenwert überschreitet, einer festen Anzahl oder mehr entspricht, wobei der vorbestimmte Schwellenwert basierend auf Berechnungsergebnissen der Anomalierate der gesamten Diagnosezielanlage (5), die eine Datenfluktuation während des Lernprozesses berücksichtigen, passend eingestellt wird.

2. Anlagenanomalie-Diagnosevorrichtung (2) nach Anspruch 1, wobei die ART-Steuerungseinheit (104) ferner konfiguriert ist, die ART-Prozesseinheit (105) zu aktivieren, wenn eine Anzahl, in der die Anomalierate jedes der mehreren Messdatenelementen, die von der Anomalieraten-Berechnungseinheit (103) berechnet worden ist, einen zweiten vorbestimmten Schwellenwert übersteigt, einer zweiten festen Anzahl oder mehr entspricht.

3. Anlagenanomalie-Diagnosevorrichtung (2) nach Anspruch 1, wobei die ART-Steuerungseinheit (104) ferner konfiguriert ist, die ART-Prozesseinheit (105) zu aktivieren, wenn eine Anzahl, in der eine Kategorie, die eine Normalität anzeigt, in einem kürzesten Abstand zu den mehreren Messdatenelementen in dem Raum ist, ausgewählt wird, einer dritten Anzahl oder mehr entspricht.

4. Anlagenanomalie-Diagnosesystem (1), das Folgendes umfasst:

   die Anlagenanomalie-Diagnosevorrichtung (2) nach einem der Ansprüche 1 bis 3,
   eine Anlagesteuerungsvorrichtung (3), die konfiguriert ist, einen Prozess der Diagnosezielanlage (5) zu steuern und mehrere Messdatenelemente von verschiedenen Sensoren, die in der Diagnosezielanlage (5) installiert sind, zu der Anlagenanomalie-Diagnosevorrichtung (2) zu übertragen; und
   eine Eingabe-/Ausgabevorrichtung (4), die eine Eingabeeinheit und eine Anzeigeeinheit (410) enthält.

5. Anlagenanomalie-Diagnosesystem (1) nach Anspruch 4, wobei die Anzeigeeinheit (410) einen ersten Anzeigebereich (411), der konfiguriert ist, eine zeitliche Änderung der Anomalierate jedes der mehreren Messdatenelemente, die von der Anomalieraten-Berechnungseinheit (103) berechnet worden sind, anzuzeigen, und einen zweiten Anzeigebereich (412), der konfiguriert ist, eine zeitliche Änderung einer Kategoriezahl, die durch den Kategoriebestimmungsprozess durch die ART-Prozesseinheit (105) erhalten wird, enthält.

6. Anlagenanomalie-Diagnosesystem (1) nach Anspruch 4, wobei die Anzeigeeinheit (410) einen ersten Anzeigebereich (411), der konfiguriert ist, eine zeitliche Änderung einer Kategoriezahl, die durch einen Kategoriebestimmungsprozess durch die ART-Prozesseinheit (105) erhalten worden ist, anzuzeigen, und einen Eingabebereich (413), der konfiguriert ist, eine Eingabe einer Registrierung eines anomalen Ereignisses über die Eingabeeinheit zu empfangen, enthält.

## Revendications

1. Dispositif de diagnostic d'anomalie d'installation (2), comprenant :

   une unité de calcul de taux d'anomalie (103) configurée pour calculer un taux d'anomalie d'une installation cible de diagnostic entière (5) à partir d'une pluralité d'éléments de données de mesure de divers capteurs installés dans l'installation cible de diagnostic (5) sur la base d'une différence de distance dans un espace entre des données et la pluralité d'éléments de données de mesure, les données appartenant à une catégorie déterminée pendant un traitement d'apprentissage sur la base des données pendant un temps de fonctionnement normal de l'installation cible de diagnostic (5) par un algorithme de théorie de résonance adaptative ;
   une unité de traitement ART (105) configurée pour exécuter un traitement de détermination de catégorie par l'algorithme de théorie de résonance adaptative ; et
   une unité de commande ART (104) configurée pour commander un moment d'activation de l'unité de traitement ART (105),
   dans lequel l'unité de calcul de taux d'anomalie (103) est configurée pour calculer un taux d'anomalie de chacun de la pluralité d'éléments de données de mesure sur la base d'une différence de distance dans une direction de signal entre les données et chacun de la pluralité d'éléments de données de mesure, les données appartenant à la catégorie déterminée sur la base des données pendant le temps normal de fonctionnement de l'installation cible de diagnostic (5), et
   **caractérisé en ce que**
   l'unité de commande ART (104) est configurée pour activer l'unité de traitement ART (105) lorsqu'un nombre de fois que le taux d'anomalie de l'installation cible de diagnostic entière (5) calculé par l'unité de calcul de taux d'anomalie (103) dépasse un seuil prédéterminé est un nombre fixe de fois ou plus, dans lequel le seuil prédéterminé est fixé de manière appropriée sur la base de résultats de calcul du taux d'anomalie de l'installation cible de diagnostic entière (5) en tenant compte d'une fluctuation de données pendant le traitement d'apprentissage.

2. Dispositif de diagnostic d'anomalie d'installation (2) selon la revendication 1, dans lequel l'unité de commande ART (104) est en outre configurée pour activer l'unité de traitement ART (105) lorsqu'un nombre de fois que le taux d'anomalie de chacun de la pluralité d'éléments de données de mesure calculés par l'unité de calcul de taux d'anomalie (103) dépasse un deuxième seuil prédéterminé est un deuxième nombre fixe de fois ou plus.

EP 3 514 642 B1

**3.** Dispositif de diagnostic d'anomalie d'installation (2) selon la revendication 1, dans lequel l'unité de commande ART (104) est en outre configurée pour activer l'unité de traitement ART (105) lorsqu'un nombre de fois qu'une catégorie indiquant une normalité se trouvant à une distance la plus proche de la pluralité d'éléments de données de mesure dans l'espace est sélectionnée est un troisième nombre fixe de fois ou plus.

**4.** Système de diagnostic d'anomalie d'installation (1) comprenant :

le dispositif de diagnostic d'anomalie d'installation (2) selon l'une des revendications 1 à 3,
un dispositif de commande d'installation (3) configuré pour commander un processus de l'installation cible de diagnostic (5) et pour transmettre au dispositif de diagnostic d'anomalie d'installation (2) une pluralité d'éléments de données de mesure de divers capteurs installés dans l'installation cible de diagnostic (5) ; et
un dispositif d'entrée/sortie (4) qui inclut une unité d'entrée et une unité d'affichage (410).

**5.** Système de diagnostic d'anomalie d'installation (1) selon la revendication 4, dans lequel l'unité d'affichage (410) inclut une première région d'affichage (411) configurée pour afficher un changement temporel du taux d'anomalie de chacun de la pluralité d'éléments de données de mesure calculés par l'unité de calcul de taux d'anomalie (103), et une deuxième région d'affichage (412) configurée pour afficher un changement temporel d'un numéro de catégorie obtenu par un traitement de détermination de catégorie par l'unité de traitement ART (105).

**6.** Système de diagnostic d'anomalie d'installation selon la revendication 4, dans lequel l'unité d'affichage (410) inclut une première région d'affichage (411) configurée pour afficher un changement temporel d'un numéro de catégorie obtenu par un traitement de détermination de catégorie par l'unité de traitement ART (105), et une région d'entrée (413) configurée pour recevoir une entrée d'enregistrement d'événement anormal via l'unité d'entrée.

# FIG. 1

# FIG. 2

# FIG. 3

CATEGORY

RESET → CATEGORY OUTPUT UNIT (F2 LAYER) — 312

313 → CATEGORY VALIDITY DETERMINING UNIT (Orienting Subsystem)

314 → MEMORY

INPUT PATTERN HOLDING UNIT (F1 LAYER) — 311

NORMALIZING/ NOISE CANCELING UNIT (F0 LAYER) — 310

INPUT DATA

# FIG. 4

| CATEGORY NUMBER | NORMAL/ ABNORMAL | NUMBER OF ITEMS OF DATA | INPUT DATA AVERAGE VALUE | | |
|---|---|---|---|---|---|
| | | | SIGNAL A | SIGNAL B | ... |
| 0 | 0 | 40 | 0.6 | 0.3 | ... |
| 1 | 0 | 30 | 0.5 | 0.3 | ... |
| ⋮ | ⋮ | | | | ... |
| 5 | 1 | 4 | 0.4 | 0.8 | ... |
| ⋮ | ⋮ | | | | |

## FIG. 5

| DATE | GENERATOR OUTPUT (MW) (SIGNAL A) | FUEL FLOW RATE (kg/s) (SIGNAL B) | ... |
|---|---|---|---|
| 2016／6／1　00:00 | 1000 | 100 | ... |
| 2016／6／1　00:10 | 1000 | 100 | ... |
| ⋮ | ⋮ | ⋮ | ... |
| 2016／6／1　01:30 | 950 | 95 | ... |
| ⋮ | | | |

## FIG. 6

| DATE | NORMAL/ ABNORMAL | CATEGORY NUMBER |
|---|---|---|
| 2016／6／1　00:00 | 0 | 0 |
| 2016／6／1　00:10 | 0 | 1 |
| ⋮ | ⋮ | ⋮ |
| 2016／6／1　01:30 | 1 | 10 |
| ⋮ | | |

# FIG. 7

| CATEGORY NUMBER | ABNORMAL EVENT |
|---|---|
| 5 | PUMP FAILURE |
| 10 | DECREASE IN HEAT TRANSFER EFFICIENCY OF HEAT EXCHANGER |
| ⋮ | ⋮ |

# FIG. 8

## FIG. 9

ABNORMALITY RATE OF SIGNAL X2 ($S_{X2}$)

ABNORMALITY RATE OF SIGNAL X1 ($S_{X1}$)

TIME

## FIG. 10

| DATE | ABNORMALITY RATE | ABNORMALITY CONTRIBUTION RATE (Rn) | | |
|---|---|---|---|---|
| | | SIGNAL A | SIGNAL B | ... |
| 2016／6／1　00：00 | 0.01 | 0.0 | 0.0 | ... |
| 2016／6／1　00：10 | 0.01 | 0.0 | 0.0 | ... |
| ⋮ | ⋮ | ⋮ | ⋮ | ... |
| 2016／6／1　01：30 | 0.05 | 0.1 | 0.5 | ... |
| ⋮ | | | | |

# FIG. 11

## FIG. 12

## FIG. 13

# FIG. 14

410

CATEGORY NUMBER

7
6
5
4
3
2
1

0:00    1:00    2:00    3:00
6/1

} ABNORMAL CATEGORY
} NORMAL CATEGORY

411

ABNORMAL EVENT REGISTRATION

CATEGORY NUMBER    [ 5 ] — [ 7 ]

ABNORMAL EVENT    [ PUMP FAILURE ]

413

414    415

[ REGISTER ]    [ CANCEL ]

# FIG. 15

410

CATEGORY NUMBER

7
6
5
4
3
2
1

10:00    11:00    12:00    13:00
7/15

} ABNORMAL CATEGORY
} NORMAL CATEGORY

411

ABNORMAL EVENT

| TIME | OCCURRING EVENT | CATEGORY |
|------|-----------------|----------|
| 12:30 | PUMP FAILURE | 5 |

412

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016081482 A

- WO 2011089649 A1